# EUROPÄISCHE PATENTANMELDUNG

(11) **EP 3 098 388 A1**
(43) Veröffentlichungstag der Anmeldung: **30.11.2016**
(21) Anmeldenummer: 15169648.1
(22) Anmeldetag: 28.05.2015
(51) Int. Cl.: F01D 5/30

(54) **LAUFSCHAUFEL FÜR EINE GASTURBINE**

(71) Anmelder: Siemens Aktiengesellschaft, 80333 München (DE)
(72) Erfinder: Ahmad, Fathi, 41564 Kaarst (DE); Kurt, Nihal, 40231 Düsseldorf (DE); Paul, Uwe, 40882 Ratingen (DE); Rieger, Albrecht, 14052 Berlin (DE)

(57) **Zusammenfassung**

Mit einer Laufschaufel (1) für eine Gasturbine (100), umfassend ein Schaufelblatt (2) mit einer Druckseite (10) und einer Saugseite (12), die in eine Plattform (14) übergehen, an die sich ein Befestigungsbereich (16) mit einer Tannenbaumfeder (18) anschließt, die eine Mehrzahl von auf der Druckseite (10) und der Saugseite (12) angeordneten, sich in azimutaler Richtung erstreckenden seitlichen Zahnfortsätzen (20, 22, 24, 26, 28, 30) umfasst, soll ein höherer Wirkungsgrad bei gleichzeitig hoher Lebensdauer der Gasturbine und ihrer Komponenten erreicht werden können. Dazu ist in einem axialen Bereich eines seitlichen Zahnfortsatzes (20, 22, 24), in dem die Druckbelastung im Betrieb eine vorgegebene Schwelle überschreitet, die azimutale Ausdehnung des seitlichen Zahnfortsatzes (20, 22, 24) verringert.

## Beschreibung

Die Erfindung betrifft eine Laufschaufel für eine Gasturbine, umfassend ein Schaufelblatt mit einer Druckseite und einer Saugseite, die in eine Plattform übergehen, an die sich ein Befestigungsbereich mit einer Tannenbaumfeder anschließt, die eine Mehrzahl von auf der Druckseite und der Saugseite angeordneten, sich in azimutaler Richtung erstreckenden seitlichen Zahnfortsätzen umfasst. Sie betrifft weiter Verfahren zur Herstellung und zur Nachbearbeitung einer derartigen Laufschaufel.

Laufschaufeln der oben genannten Art dienen in Gasturbinen zur Umwandlung der Energie eines heißen Gasstroms in rotatorische Energie. Sie weisen typischerweise ein von einem oder mehreren Hohlräumen zur Führung von Kühlluft durchzogenes Schaufelblatt auf, das eine konkav geformte Druckseite und eine konvex geformte Saugseite aufweist. Das Schaufelblatt geht in eine im Wesentlichen zu diesem senkrecht erstreckte Plattform über, die den Innenraum des Rotors vor Eindringen von Heißgas schützt. An die Plattform schließt sich der Befestigungsbereich an, mit dem die Schaufel am Rotor, nämlich einer Turbinenscheibe befestigt wird. Plattform und Befestigungsbereich bilden zusammen den Schaufelfuß.

Die Befestigung erfolgt in der Regel über eine Tannenbaumverbindung. Hierbei handelt es sich im Wesentlichen um eine Variante einer Schwalbenschwanzverbindung mit mehrfach gezacktem Schwalbenschwanz. Der Befestigungsbereich weist hierfür eine gerade Tannenbaumfeder auf, die sich im Wesentlichen entlang der Haupterstreckungsrichtung des Schaufelblatts erstreckt (in der Regel die axiale Richtung; die Begriffe axial, azimutal oder radial beziehen sich im Folgenden stets auf die Achse der Gasturbine) und beiderseitig mehrere seitliche Zahnfortsätze (die Zacken des Tannenbaums) aufweist. Die Turbinenscheibe weist für jede Laufschaufel eine entsprechende Nut auf.

Aufgrund des Wunsches nach immer höheren Wirkungsgraden sind Gasturbinenkomponenten immer höheren Temperaturen und damit thermomechanischen Belastungen ausgesetzt. Hierbei sind insbesondere die Schaufelfüße und Turbinenscheibennuten hohen Belastungen unterworfen und bilden häufig das limitierende Element hinsichtlich der Auslegung.

Es ist daher Aufgabe der Erfindung, eine Laufschaufel sowie Verfahren zur Herstellung und zur Nachbearbeitung einer Laufschaufel der eingangs genannten Art anzugeben, mit denen ein höherer Wirkungsgrad bei gleichzeitig hoher Lebensdauer der Gasturbine und ihrer Komponenten erreicht werden kann.

Diese Aufgabe wird bezüglich der Laufschaufel erfindungsgemäß gelöst, indem in einem axialen Bereich eines seitlichen Zahnfortsatzes, in dem die Druckbelastung im Betrieb eine vorgegebene Schwelle überschreitet, die azimutale Ausdehnung des seitlichen Zahnfortsatzes verringert ist.

Bezüglich des Verfahrens zum Herstellen einer Laufschaufel wird die Aufgabe durch die folgenden Schritte gelöst:
- Ermitteln einer Druckbelastung eines seitlichen Zahnfortsatzes im Betrieb,
- Ermitteln eines axialen Bereichs des seitlichen Zahnfortsatzes, in dem die Druckbelastung im Betrieb eine vorgegebene Schwelle überschreitet,
- Abtragen des seitlichen Zahnfortsatzes derart, dass die azimutale Ausdehnung des seitlichen Zahnfortsatzes in diesem axialen Bereich verringert ist.

Bezüglich des Verfahrens zur Nachbearbeitung einer Laufschaufel wird die Aufgabe durch die folgenden Schritte gelöst:
- Ermitteln einer Druckbelastung eines seitlichen Zahnfortsatzes im Betrieb
- Ermitteln eines axialen Bereichs des seitlichen Zahnfortsatzes, in dem die Druckbelastung im Betrieb eine vorgegebene Schwelle überschreitet,
- Formen des seitlichen Zahnfortsatzes derart, dass die azimutale Ausdehnung des seitlichen Zahnfortsatzes in diesem axialen Bereich verringert ist.

Die Erfindung geht dabei von der Überlegung aus, dass Wirkungsgrad und Lebensdauer erhöht werden, wenn die durch Erhöhung von Rotationsgeschwindigkeit und Temperatur auftretenden Belastungen gleichmäßig auf die hochbelasteten Bereiche wie die bereits erwähnten Schaufelfüße und Turbinenradnuten verteilt würden. Die Belastungen hier resultieren im Wesentlichen aus den zentrifugalen und aerodynamischen Kräften auf das Schaufelblatt. Hierbei hat sich herausgestellt, dass bei den meisten bekannten Tannenbaumdesigns eine äußerst unregelmäßige Druckverteilung auf die seitlichen Zahnfortsätze sowohl hinsichtlich der Druck- und Saugseite, als auch hinsichtlich der axialen und radialen Anordnung des jeweiligen Zahnfortsatzes an der Tannenbaumfeder auftritt. Dadurch sind diese hoch druckbelasteten Bereiche häufig der Flaschenhals hinsichtlich der Lebensdauer des Laufschaufelfußes und der Turbinenradnuten. Die Druckbelastung kann hier dadurch verringert werden, indem bei unveränderter, gerader Nutform die azimutale Ausdehnung der hoch druckbelasteten Bereiche eines Zahnfortsatzes reduziert wird. Hierdurch ergibt sich ein geringer Spalt zwischen diesem Bereich und der seitlichen Nutwand, so dass bei einer Druckbelastung hier zuerst keine Kraft angreifen kann und die Krafteinwirkung dadurch auf die weniger belasteten Bereiche verlagert wird. Eine Kraft kann hier erst dann angreifen, wenn durch elastische Verformung in Folge des Drucks der Spalt im Betrieb geschlossen wird.

Im Herstellungsprozess werden diese hoch druckbelasteten Bereiche zunächst z. B. durch Versuchsmessungen oder rechnerische Simulationen ermittelt. Hierdurch können gezielt die druckbelasteten Bereiche lokalisiert werden, in denen eine Reduzierung der azimutalen Ausdehnung der Zahnfortsätze angezeigt ist. Diese werden dann im Herstellungsprozess z. B. durch Anpassung der Gussform direkt entsprechend ausgeformt. Alternativ kann im Wege einer Nachbearbeitung ein in azimutaler Ausdehnung über die gesamte axiale Länge konstanter Zahnfortsatz in den entsprechenden Bereichen abgetragen werden, z. B. durch Laser oder mittels mechanischer, z. B. zerspanender Verfahren.

In vorteilhafter Ausgestaltung der Laufschaufel ist der seitliche Zahnfortsatz, dessen azimutale Ausdehnung reduziert ist, auf der Saugseite der Laufschaufel angeordnet. Gerade hier ist nämlich aufgrund der aerodynamischen Kräfte auf die Laufschaufel der Druck besonders hoch, so dass hier eine Gleichverteilung geboten und hinsichtlich einer erhöhten Lebensdauer besonders effizient ist.

In weiterer vorteilhafter Ausgestaltung der Laufschaufel ist die azimutale Ausdehnung des am weitesten von der Plattform entfernten seitlichen Zahnfortsatzes verringert. Insbesondere im von der Plattform und dem Schaufelblatt am weitesten entfernten Bereich ist durch die Hebelwirkung der Druck besonders groß.

Bei einer Laufschaufel, die für eine Einschubrichtung parallel zur Axialrichtung der Gasturbine ausgelegt ist, umfasst der axiale Bereich vorteilhafterweise die axiale Mitte des seitlichen Zahnfortsatzes. Bei derartigen Laufschaufeln, die für einen Einschub in die Nuten in der Turbinenscheibe parallel zur Axialrichtung ausgebildet sind, d. h. der so genannte Staggerwinkel gleich 0° ist, tritt die maximale Belastung nämlich axial mittig auf.

In noch vorteilhafterer Ausgestaltung ist bei solchen Laufschaufeln die azimutale Ausdehnung des seitlichen Zahnfortsatzes symmetrisch zu dessen axialer Mitte ausgebildet, da die Druckbelastung sogar symmetrisch zur axialen Mitte ist. Bei einer Laufschaufel, die für eine zur Axialrichtung geneigte Einschubrichtung ausgelegt ist, ist der axiale Bereich hingegen vorteilhafterweise außerhalb der axialen Mitte des seitlichen Zahnfortsatzes angeordnet. Bei derartigen Laufschaufeln, die für einen Einschub in die Nuten in der Turbinenscheibe geneigt zur Axialrichtung ausgebildet sind, d. h. der so genannte Staggerwinkel ungleich, in der Regel größer als 0° ist, tritt die maximale Belastung nämlich nicht axial mittig auf, sondern vielmehr in Richtung der Stirnseiten.

In weiterer vorteilhafter Ausgestaltung sowohl der Laufschaufel als auch der Verfahren ist die axiale Ausdehnung an einem Punkt im Bereich des seitlichen Zahnfortsatzes eine Funktion, insbesondere eine monotone Funktion der Druckbelastung im Betrieb. Bezüglich der Verfahren wird der seitliche Zahnfortsatz dementsprechend geformt bzw. abgetragen. Mit anderen Worten: Je stärker die ermittelte Druckbelastung an einem Punkt des seitlichen Zahnfortsatzes, desto stärker wird hier die axiale Ausdehnung reduziert. Hierdurch wird eine bestmögliche Vergleichmäßigung der Druckbelastung erreicht.

Ein Rotor für eine Gasturbine umfasst vorteilhafterweise eine derartige Laufschaufel und/oder eine Laufschaufel, hergestellt oder nachbearbeitet mit den jeweils beschriebenen Verfahren.

Eine Gasturbine umfasst vorteilhafterweise einen derartigen Rotor.

Die mit der Erfindung erzielten Vorteile bestehen insbesondere darin, dass durch die Verschmälerung der Zahnfortsätze der ansonsten in Axialrichtung mit konstantem Querschnitt versehenen Tannenbaumfeder in besonders druckbelasteten Bereichen eine Vergleichmäßigung der Druckbelastung im Betrieb erreicht wird und damit die Lebensdauer der Laufschaufel verlängert wird. Eine derartige Reduzierung der azimutalen Ausdehnung ist auch bei bereits eingesetzten Laufschaufeln in praktisch allen Gasturbinen nachrüstbar, so dass sich auch hier die Lebensdauer erhöhen lässt. Besondere Nachbearbeitungswerkzeuge sind nicht erforderlich, es können Standardwerkzeuge verwendet werden.

Die Erfindung wird anhand von Zeichnungen näher erläutert. Darin zeigen:
- FIG 1: Eine Teilansicht einer Laufschaufel mit Tannenbaumfeder im Befestigungsbereich mit verringerter azimutaler Ausdehnung der Zahnfortsätze auf der Saugseite,
- FIG 2: eine Seitenansicht der Laufschaufel mit einer Isobaren-Darstellung der Druckbelastung im Betrieb, und
- FIG 3: einen Teillängsschnitt durch eine Gasturbine.

Gleiche Teile sind in allen Figuren mit den gleichen Bezugszeichen versehen.

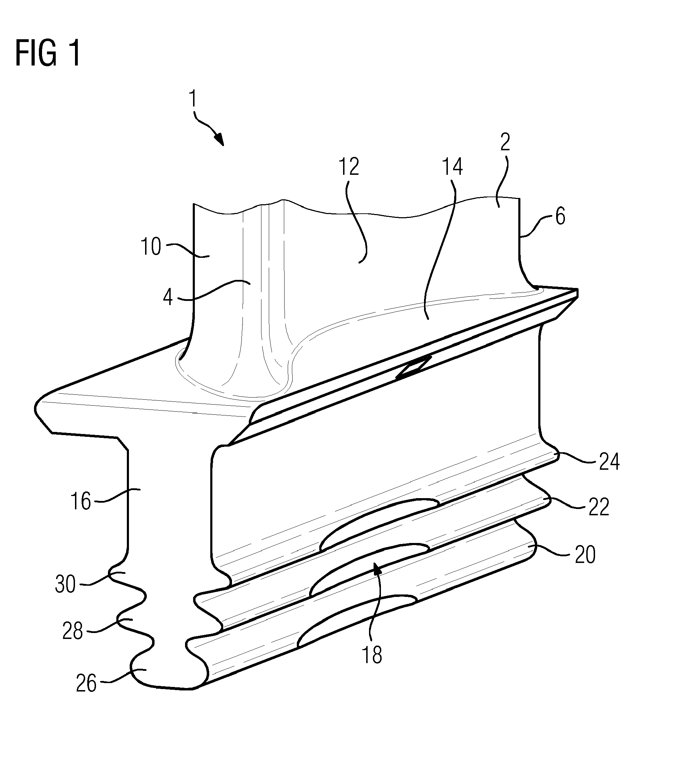

In FIG 1 ist eine Laufschaufel 1 für eine Gasturbine gezeigt. Die Laufschaufel 1 weist zunächst ein gerades Schaufelblatt 2 auf, welches nur teilweise dargestellt ist. Das Profil des Schaufelblatts 2 ähnelt dem einer Flugzeugtragfläche. Es weist eine abgerundete Profilnase 4 und eine Profilhinterkante 6 auf. Zwischen Profilnase 4 und Profilhinterkante 6 erstrecken sich die (in FIG 1 rückseitige) konkave Druckseite 10 und die konvexe Saugseite 12 der Laufschaufel 1.

An das Schaufelblatt 2 schließt sich der Laufschaufelfuß an, der zunächst die Plattform 14 umfasst. Die Plattform 14 dient der Abdichtung des Rotors der Gasturbine gegen das Heißgas, welches die Laufschaufel 1 umströmt. An die Plattform 14 schließt sich - ebenfalls als Teil des Laufschaufelfußes - der Befestigungsbereich 16 an. Dieser besteht im Wesentlichen aus einer Tannenbaumfeder 18, mittels derer die Laufschaufel 1 in einer entsprechenden Nut in der Turbinenscheibe in einer tannenbaumartigen Nut-Feder-Verbindung fixiert wird.

Die Tannenbaumfeder 18 verjüngt sich in axialer Richtung in Richtung von der Plattform 14 weg, d. h. radial nach innen und weist beiderseits, d. h. sowohl auf der Druckseite 10 als auch auf der Saugseite 12 jeweils drei parallele, sich in azimutaler Richtung erstreckende Zahnfortsätze 20, 22, 24, 26, 28, 30 auf. Der Querschnitt der Tannenbaumfeder 18 ist dabei in axialer Richtung im Wesentlichen konstant.

In Abkehr von dieser letztgenannten Konstanz ist jedoch in einem bezüglich der axialen Ausdehnung der Tannenbaumfeder 18 symmetrisch mittigen, sich etwa über ein Drittel der axialen Ausdehnung erstreckenden Bereich der drei saugseitigen Zahnfortsätze 22, 24, 26 die azimutale Ausdehnung der Zahnfortsätze 22, 24, 26 verringert. In diesem Bereich liegt nämlich die Druckbelastung im Betrieb über einer vorgegebenen Schwelle. Durch die Verringerung der azimutalen Ausdehnung wird dieser Bereich entlastet.

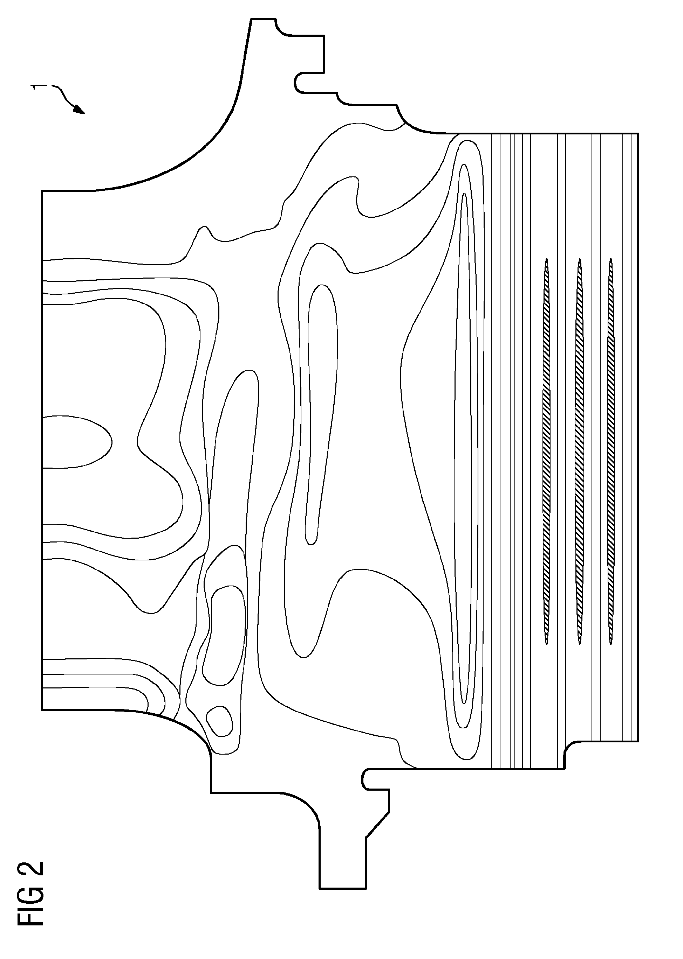

FIG 2 zeigt diese Druckbelastung, die mittels einer Simulation ermittelt wurde, an einer Tannenbaumfeder 18 ohne Verringerung der azimutalen Ausdehnung der Zahnfortsätze 22, 24, 26. Die FIG 2 zeigt hier Isobaren, weswegen auf eine Darstellung von Bezugszeichen bis auf das der Laufschaufel 1 aus Gründen der Übersicht verzichtet wurde. Im genannten, mittigen Bereich der Zahnfortsätze 22, 24, 26 liegt die Druckbelastung insgesamt am höchsten, nämlich bei fast 1000 MPa im Betrieb. Ein geeigneter Schwellwert könnte hier beispielsweise bei 700 MPa liegen, wird aber für den Fachmann entsprechend geeignet wählbar sein.

Erkennbar ist zudem, dass in axialer Richtung die Druckbelastung von außen zur Mitte hin zunimmt und zudem mit zunehmender Entfernung des Zahnfortsatzes 20, 22, 24 von der Plattform 14 weg immer größer wird. Dementsprechend ist Bereich der Verringerung der azimutalen Ausdehnung der Zahnfortsätze 20, 22, 24 in FIG 1 diese Verteilung der Druckbelastung abgebildet, die Stärke der Verringerung ist also eine Funktion der Druckbelastung: In der axialen Mitte ist die Verringerung am stärksten ausgeprägt und wird zum Rand des Bereichs hin immer schwächer. Ebenso ist mit zunehmender Entfernung des Zahnfortsatzes 20, 22, 24 die Verringerung jeweils immer stärker ausgeprägt.

Die dargestellte Verringerung der azimutalen Ausdehnung der Zahnfortsätze 20, 22, 24 der Laufschaufel 1 in FIG 1 ist im Herstellungsprozess, z. B. direkt beim Gießen der Laufschaufel 1 eingebracht, kann aber auch mittels Nachbearbeitung durch zerspanende Verfahren oder durch Abtragen mittels Laser erfolgen. Dabei wird vorab die Druckbelastung durch Simulation oder anderweitig, z. B. durch entsprechende Versuchsanordnungen ermittelt.

Die in der FIG 1 dargestellte Laufschaufel 1 ist für eine Einschubrichtung, d. h. Nutausrichtung in der Turbinenscheibe ausgebildet, die parallel zur Axialrichtung liegt. Hierfür sind beispielsweise rechte Winkel zwischen den Stirnseiten und den Seitenflächen der Tannenbaumfeder 18 vorgesehen. In einer nicht dargestellten Ausführungsform der Laufschaufel 1 ist diese für eine Einschubrichtung vorgesehen, die gegenüber der Axialrichtung geneigt ist, der so genannte Staggerwinkel ist dabei größer als 0°. Bei einer derartigen Laufschaufel 1 ist der Bereich, in dem die Verringerung der azimutalen Ausdehnung der Zahnfortsätze 20, 22, 24 angeordnet ist, nicht symmetrisch um die axiale Mitte herum angeordnet. Vielmehr ist dieser Bereich zu einer der Stirnseiten hin verschoben und umfasst die Mitte ggf. auch nicht mehr.

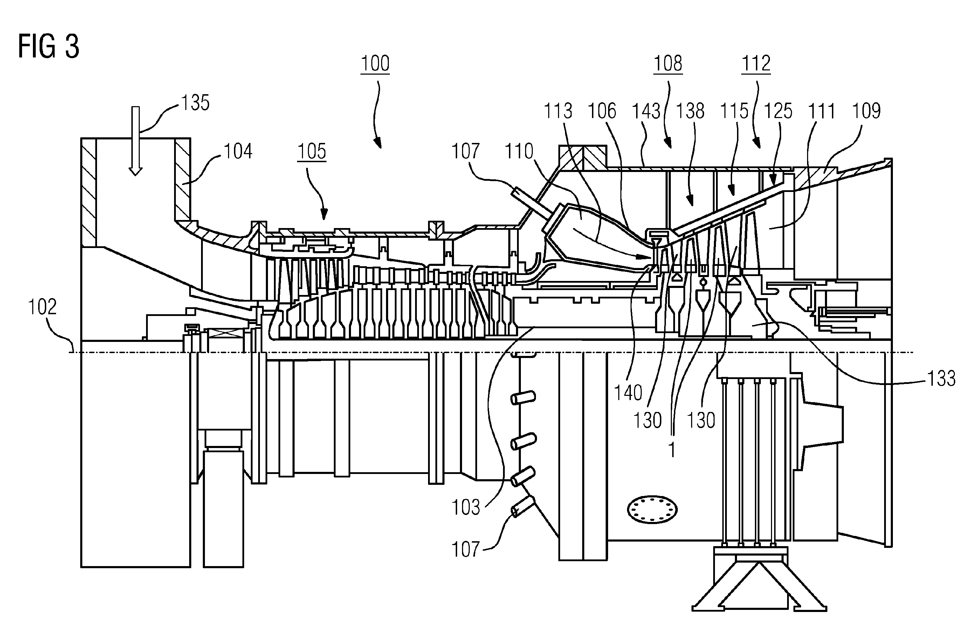

Die FIG 3 zeigt schließlich eine Gasturbine 100 in einem Längsteilschnitt. Eine Turbine ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 1 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 1 einer Reihe 125 mittels einer Turbinenscheibe 133 am Rotor 103 angebracht sind. Die Laufschaufeln 1 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 1.

Dem Fluidstrom wird durch die möglichst wirbelfreie laminare Umströmung der Turbinenschaufeln 1, 130 ein Teil seiner inneren Energie entzogen, der auf die Laufschaufeln 1 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. Die Leitschaufeln 130 und Laufschaufeln 1 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 1, 130 werden daher aus Titan-Legierungen, Nickel-Superlegierung oder Wolfram-Molybdän-Legierungen gefertigt. Die Schaufeln werden für höhere Resistenz gegen Temperaturen so wie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise Zr02, Y2O4-ZrO2) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 1, 130 angewendet.

Jede Leitschaufel 130 weist einen auch als Plattform bezeichneten, dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103. Ebenso weist jede Laufschaufel 1 einen derartigen Laufschaufelfuß auf, endet jedoch in einer Laufschaufelspitze. Diese ist gemäß der in FIG 1 gezeigten Ausführungsform ausgestaltet.

## Patentansprüche

1. Laufschaufel (1) für eine Gasturbine (100),
umfassend ein Schaufelblatt (2) mit einer Druckseite (10) und einer Saugseite (12), die in eine Plattform (14) übergehen, an die sich ein Befestigungsbereich (16) mit einer Tannenbaumfeder (18) anschließt, die eine Mehrzahl von auf der Druckseite (10) und der Saugseite (12) angeordneten, sich in azimutaler Richtung erstreckenden seitlichen Zahnfortsätzen (20, 22, 24, 26, 28, 30) umfasst,
wobei in einem axialen Bereich eines seitlichen Zahnfortsatzes (20, 22, 24), in dem die Druckbelastung im Betrieb eine vorgegebene Schwelle überschreitet, die azimutale Ausdehnung des seitlichen Zahnfortsatzes (20, 22, 24) verringert ist.

2. Laufschaufel (1) nach Anspruch 1,
bei der der seitliche Zahnfortsatz (20, 22, 24) auf der Saugseite (12) der Laufschaufel (1) angeordnet ist.

3. Laufschaufel (1) nach einem der vorhergehenden Ansprüche,
bei der die azimutale Ausdehnung des am weitesten von der Plattform (14) entfernten seitlichen Zahnfortsatzes (20) verringert ist.

4. Laufschaufel (1) nach einem der vorhergehenden Ansprüche,
die für eine Einschubrichtung parallel zur Axialrichtung ausgelegt ist,
wobei der axiale Bereich die axiale Mitte des seitlichen Zahnfortsatzes (20, 22, 24) umfasst.

5. Laufschaufel (1) nach Anspruch 4,
bei der die azimutale Ausdehnung des seitlichen Zahnfortsatzes (20, 22, 24) symmetrisch zu dessen axialer Mitte ausgebildet ist.

6. Laufschaufel (1) nach einem der Ansprüche 1 bis 3,
die für eine zur Axialrichtung geneigte Einschubrichtung ausgelegt ist,
wobei der axiale Bereich außerhalb der axialen Mitte des seitlichen Zahnfortsatzes angeordnet ist.

7. Laufschaufel (1) nach einem der vorhergehenden Ansprüche,
bei der die axiale Ausdehnung an einem Punkt im Bereich des seitlichen Zahnfortsatzes (20, 22, 24) eine Funktion der Druckbelastung im Betrieb ist.

8. Verfahren zum Herstellen einer Laufschaufel (1) für eine Gasturbine (100),
umfassend ein Schaufelblatt (2) mit einer Druckseite (10) und einer Saugseite (12), die in eine Plattform (14) übergehen, an die sich ein Befestigungsbereich (16) mit einer Tannenbaumfeder (18) anschließt, die eine Mehrzahl von auf der Druckseite (10) und der Saugseite (12) angeordneten, sich in azimutaler Richtung erstreckenden seitlichen Zahnfortsätzen (20, 22, 24, 26, 28, 30) umfasst, mit den Schritten:
- Ermitteln einer Druckbelastung eines seitlichen Zahnfortsatzes (20, 22, 24) im Betrieb,
- Ermitteln eines axialen Bereichs des seitlichen Zahnfortsatzes (20, 22, 24), in dem die Druckbelastung im Betrieb eine vorgegebene Schwelle überschreitet,
- Formen des seitlichen Zahnfortsatzes (20, 22, 24) derart, dass die azimutale Ausdehnung des seitlichen Zahnfortsatzes (20, 22, 24) in diesem axialen Bereich verringert ist.

9. Verfahren nach Anspruch 8,
bei dem der seitliche Zahnfortsatz (20, 22, 24) derart geformt wird, dass die axiale Ausdehnung an einem Punkt im Bereich des seitlichen Zahnfortsatzes (20, 22, 24) eine Funktion der Druckbelastung im Betrieb ist.

10. Verfahren zur Nachbearbeitung einer Laufschaufel für eine Gasturbine (100),
umfassend ein Schaufelblatt (2) mit einer Druckseite (10) und einer Saugseite (12), die in eine Plattform (14) übergehen, an die sich ein Befestigungsbereich (16) mit einer Tannenbaumfeder (18) anschließt, die eine Mehrzahl von auf der Druckseite (10) und der Saugseite (12) angeordneten, sich in azimutaler Richtung erstreckenden seitlichen Zahnfortsätzen (20, 22, 24, 26, 28, 30) umfasst, mit den Schritten:
- Ermitteln einer Druckbelastung eines seitlichen Zahnfortsatzes (20, 22, 24) im Betrieb,
- Ermitteln eines axialen Bereichs des seitlichen Zahnfortsatzes (20, 22, 24), in dem die Druckbelastung im Betrieb eine vorgegebene Schwelle überschreitet,
- Abtragen des seitlichen Zahnfortsatzes (20, 22, 24) derart, dass die azimutale Ausdehnung des seitlichen Zahnfortsatzes (20, 22, 24) in diesem axialen Bereich verringert ist.

11. Verfahren nach Anspruch 10,
bei dem der seitliche Zahnfortsatz (20, 22, 24) derart abgetragen wird, dass die axiale Ausdehnung an einem Punkt im Bereich des seitlichen Zahnfortsatzes (20, 22, 24) eine Funktion der Druckbelastung im Betrieb ist.

12. Rotor (103) mit einer Laufschaufel (1) nach einem der Ansprüche 1 bis 7 und/oder
einer Laufschaufel (1), hergestellt mit dem Verfahren nach Anspruch 8 oder 9 und/oder
einer Laufschaufel (1), nachbearbeitet mit dem Verfahren nach Anspruch 10 oder 11.

13. Gasturbine (100) mit einem Rotor (103) nach Anspruch 12.
